# EUROPEAN PATENT APPLICATION

(11) **EP 1 481 589 A2**
(43) Date of publication of application: **01.12.2004**
(21) Application number: 04076542.2
(22) Date of filing: 26.05.2004
(51) Int. Cl.: A21C 3/06, A21C 7/01, A21C 9/08

(54) **Method for forming dough and placing it on trays and machine for its implementation.**

(30) Priority: 26.05.2003 ES 200301239
(71) Applicant: Torrents Rius, Jaime, 08211 Castellar del Vallès (Barcelona) (ES)
(72) Inventor: Torrents Rius, Jaime, 08211 Castellar del Vallès (Barcelona) (ES)
(74) Representative: Torner Lasalle, Elisabet

(57) **Abstract**

Field of the invention

The method for forming dough and placing it on trays is of the kind in which starting from a portion of uneven dough and through a series of intermediate steps, a loaf of bread is obtained in a state prior to baking. Said method carries out a ball-shaped dough rest before forming a rough loaf with it and it incorporates a prior rolling step which consists in a slight striated crushing and a further rolling.

The machine which implements the method disclosed comprises one or more rollers to carry out a dough striated crushing at above mentioned prior rolling step.

## Description

### Field of the invention

This invention relates to a method for forming dough and placing it on trays and machine for implementing it, namely applicable for obtaining loaves of bread in a state prior to their baking for a medium-sized production.

### Background of the invention

Different proposals of methods and machines similar to those of this proposal are known in the prior art, proposed with same objective, that is to say forming loaves of bread out of a dough.

A traditional way of making such formation consisted in carrying it out semiautomatically, that is to say to automatically follow a series of steps with a machine and final steps by hand. The former consisted in kneading an uneven dough achieving thus a spherical dough, allow the ball-shaped dough to rest during a few minutes, in a bucket pouch and thereafter to carry out a prior rolling then another rolling of said ball, rolling up a flat cake shaped dough obtained after said rolling and a step of forming a loaf and stretching it. Thereafter the rest of the process is carried out by hand an operator stretching said loaves one by one and placing them on their related trays.

With this system a loaf could be obtained the dough of which was very strong or tough, but this was achieved in detriment of its capacity of being stretched and a significant formation of gas bubbles within it occurred. Another drawback of using this system was that the dough was very stressed which carried that it was required to use a great amount of additives. The requirement of at least two operators to carry out the full process was another drawback provoked by the part semi-automated system.

More recently, the process for forming bread loaves has being totally automated, adding to the traditional steps other new steps and automatically carrying out some which were manual even replacing some to other ones. It is due to this replacement that the final product obtained is different in its characteristics from the product produced with the prior system. The most important replacement was that of passing from allowing the dough rest having a spherical shape, that is to say to rest as a ball, to carry out said step after said spherical dough has became a rough loaf-shaped dough, in an intermediate step. With this, the dough gains plasticity which makes its stretching easier and to achieve longer loaves or the possibility to divide them into smaller portions, but it loses toughness therefore a less crunchy bread is obtained and having a very little crest, in short, a lower quality bread. To keep a minimum toughness in the bread more expensive flours are required and a higher amount of additives than in the traditional system. Obviously the problems which arise from the fact of using such a big machine as well as the need to carry out this process is obvious and it is expressed as the need to require more money to be invested, a more complex and expensive maintenance and a slower start up in addition to lose the capacity of adaptability to other machines the traditionally used machines had. Another drawback of this system is that the doughs with which it operates are colder, around 22 to 24° C in the semiautomatic system, which makes necessary the use of an air-conditioned workhouse. To work with colder doughs also implies that the loaves obtained are thinner. In short with this system the quality is sacrificed in the profit of a large production.

The patent application ES-A-2143395 proposes a process and a machine for forming loaves of bread in a fully automated way similar to that disclosed in above paragraph. In it, when referring to the prior art, it is commented without mentioning any document that more automated methods are known in which after that a weighing machine supply ball-shaped pieces of dough out of an initial dough, a step of rest is allowed to said spherical dough after which and by means of a shaping machine the dough is shaped stretching it to obtain shorter loaves than those to be formed, which are stored in a rest chamber as rough loaves, the definite lengthening being produced afterwards and then they are placed on trays. This double rest slows down the process and increases the number of apparatuses required, which will carry a higher cost of installation and maintenance, as well as the need to have a large space available for mounting the machine.

The object of this invention is to overcome the preceding problems, by contributing with a fully automated method and a machine for shaping and placing dough on trays, to finally obtain high quality loaves of bread, with a very good stretchability:toughness ratio of the dough for a medium-sized production, the machine proposed having reduced sizes if compared with the prior art.

### SHORT EXPLANATION OF THE INVENTION

This invention proposes a method for shaping and placing on trays dough and a machine to carry it out. With this method and starting from a portion of uneven dough, a loaf of bread is obtained in a state prior to backing, through a series of intermediate steps. Said steps in some cases are conventional, such as those mentioned in the background, in others they are a novelty contributed by this invention and even in others they are a match of some used in the semi-automated traditional systems and other used in the fully automated systems.

The already known steps could be summarized in different steps which would include at least and starting from said portion of uneven dough, providing a dough a given spherical shape and weigh, forming a rough loaf having an adjustable length from said spherical dough, adjustably rolling said rough loaf, rolling up the dough with the shape of flat cake obtained after said rolling, forming and stretching said loaf from the rolled flat cake and placing the loaf on a baking tray.

In prior steps obviously a strictly necessary step allowing the dough to rest is missing. And it is here, as explained above, that this invention contributes with a novelty which is to incorporate the traditional rest under a ball shape which was carried out in semiautomatic systems to this method which is fully automatic. Said rest will be carried out after forming the dough with a spherical shape and before forming the rough loaf, which is not required to rest again as it was done up to now in the fully automated systems. That is to say that by means of this method, in the automatic machines the rest of the dough as rough loaves is replaced by a rest in ball, as it was traditionally done but without waiving the further dough extension forming to obtain shorter loaves than those to be formed or, usually known as rough loaves, or in other words, the most traditional methods are matched with the most recent ones thus taking profit of both.

This invention contributes jointly with the explained in the preceding paragraph, with a novelty step with respect to the prior art which implies a variation of the step of conventional rolling, by the incorporation during the same of a prior rolling consisting in a slight striated crushing then a further rolling in order to distribute the gases which have been formed within the dough during the prior steps, preventing thus that bubbles are formed and increasing the dough elasticity.

### Short description of the drawings

Above and other characteristics of the invention will be more apparent in the description below of an embodiment which is illustrated in the drawings appended for illustrative, and non limiting, purpose.

In said drawings:
Fig. 1 shows a diagrammatical representation of the method object of this invention for an embodiment,
Fig. 2 shows a side elevation view of the machine object of this invention for the same embodiment of Fig. 1,
Fig. 3 shows another diagrammatical representation of the method object of this invention, for another embodiment, and
Fig. 4 shows a side elevation view of the machine object of this invention for the same embodiment of Fig. 3.

### Detailed description of an embodiment

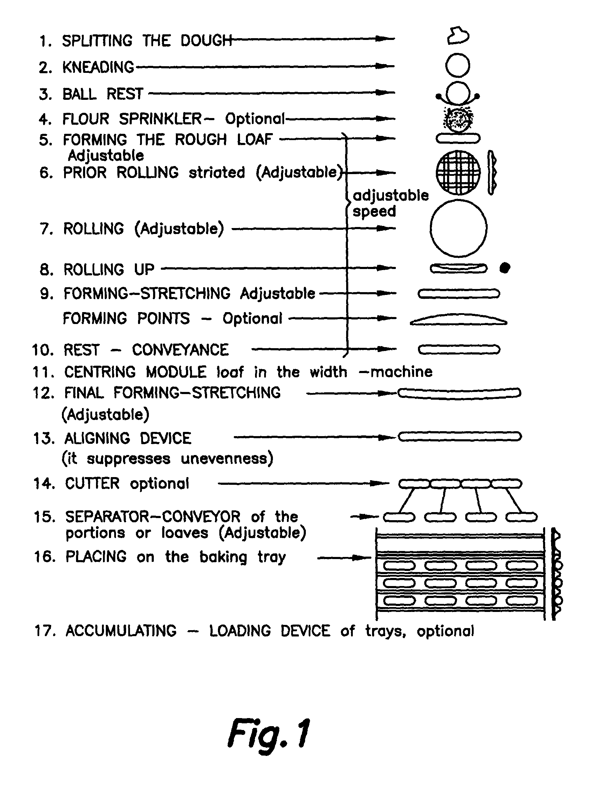

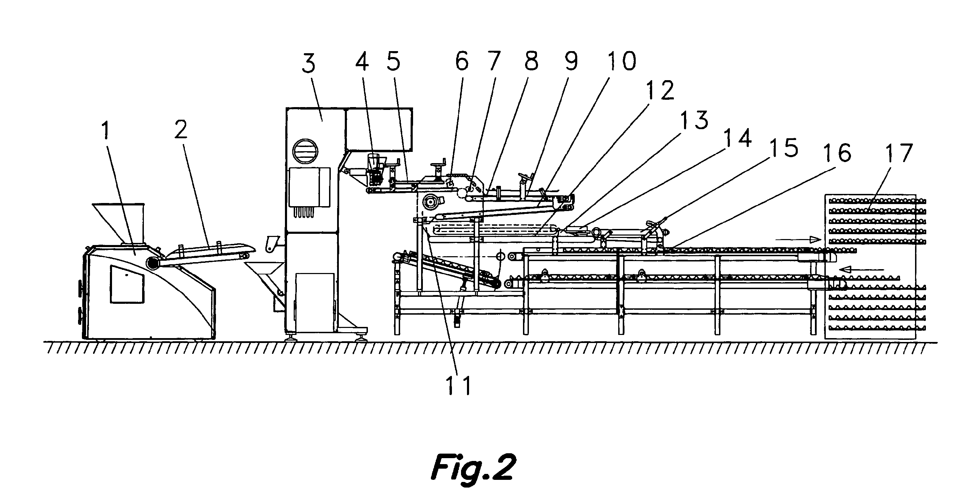

Fig. 1 diagrammatically shows the different steps to be carried out in a preferred embodiment, by the method of forming and placing on trays dough to obtain a loaf of bread in a state prior to baking, which is the object of this invention. Said steps are numbered, in the order and according the numbering of the modules which have to carry out each of them, disclosed in Fig. 2, the set of all of them forming the machine object of this invention.

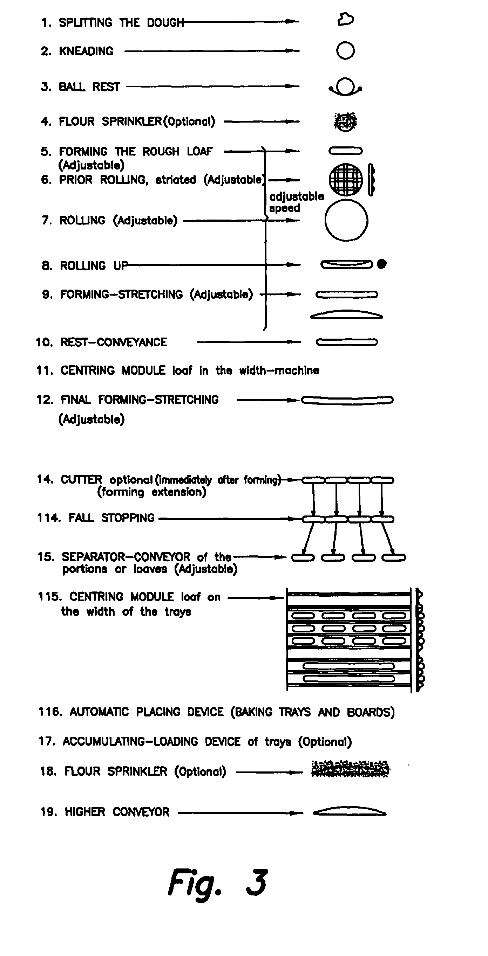

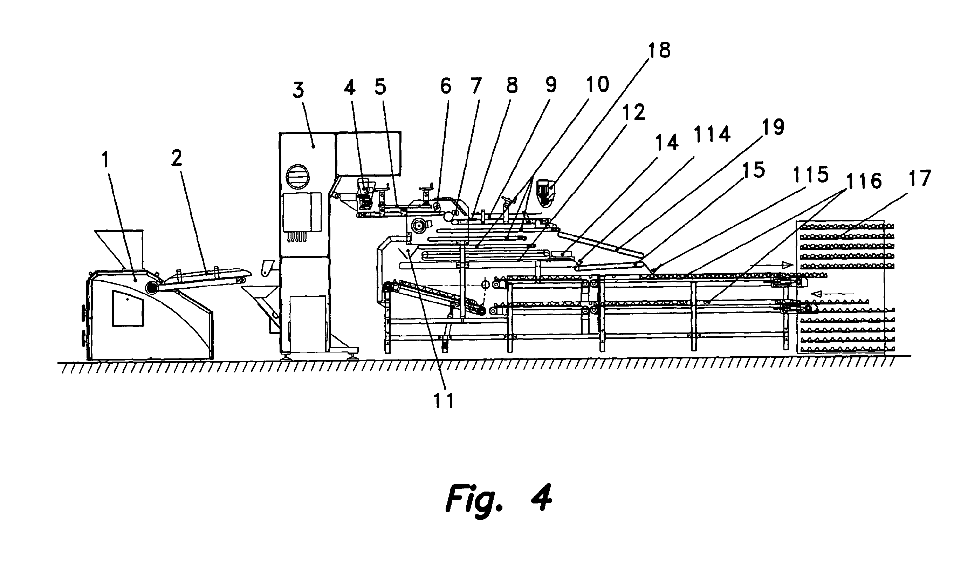

Also, Figs. 3 and 4 show, for another embodiment, the different steps to be carried out and the machine with which they are carried out, in a similar way to the embodiment disclosed in Figs. 1 and 2 but with some changes as well in the steps to be carried out as in the modules incorporated to the machine to carry out said steps.

The steps disclosed in Fig. 1 and the related modules of the machine shown in Fig. 2 disclose the whole process the dough follows before becoming a loaf. It starts with the split of the dough into uneven dough portions having a given weight, after which it is kneaded to achieve a spherical shaped dough, said steps being carried out in a splitting machine 1, 2.

The spherical shaped dough is introduced within a dynamic or tumbling chamber 3 which in other embodiment could be static, on a bucket pouch during one to twelve minutes, achieving this way that the dough acquires a great strength and toughness and therefore a higher quality than that obtained by allowing it to rest as rough loaf, which can be checked when noting the final shape of the loaf, concretely the size of its crest. An optional step which would be carried out in the event of working with very hydrated dough would be that consisting in dusting flour on the dough by means of a flour sprinkler 4.

Forming by stretching the spherical dough to obtain a loaf having an adjustable length but smaller than that of the loaves to be formed, currently called rough loaves, is the next step to carry out by means of a conical slide block 5 arranged in the forming machine (see Fig, 2). Said rough loaf will have, in a preferred embodiment a 200 mm approximate maximum length.

After said rough loaf is formed, an adjustable rolling thereof is carried out comprising a prior rolling consisting in a slight striated crushing, in an adjustable way, by means of one or several rollers 6 arranged in the machine for that purpose, providing this way a better distribution of the gases which are formed within the dough during the prior steps and thus preventing the unwanted effect from the traditional ball rest in the traditional system, which carried bubbles were formed within it. In an embodiment working with very hydrated doughs, said rollers would be made of a nonadherent material such as teflon, and would operate jointly with an adhered dough scraping cleaning system, for example scrapers.

In a second step of said adjustable rolling, a flat and definitive dough crushing is carried out, the dough taking an oval or circular shape and smooth, similar to a flat cake. This step is carried out by means of rollers 7 (see Fig. 2).

Said flat cake-shaped dough is rolled with a part 8 of the machine (see Fig. 2) which in said embodiment, in the event of working with very hydrated dough, would incorporate a metal curtain to facilitate its function.

Starting from the rolled flat cake and by means of a conical slide 9 (see Fig. 2), said loaf will be formed and adjustably stretched, said loaf usually acquiring a maximum 400 mm length, after which, and with a belt 10 (see Fig. 2), a loaf rest and conveyance step will be carried out which usually will last two to six seconds in a preferred embodiment.

In the embodiment commented for the case of very hydrated dough, between the preceding two steps an intermediate step will be intercalated materialized as a point forming system.

The following thing to be applied by means of the method object of this invention will consist in carrying out a step for centring the loaf in the width of said machine by means of a centring device 11 (see Fig. 2) arranged for such purpose, after that an adjustable final forming and stretching step will be carried out by means of a double conveyor belt 12 arranged in that machine, formed by a lower belt which is moving at a constant speed in the sense of the dough exit and a higher belt which is moving in the opposite sense to the dough exit with an adjustable speed, the dough moving between both belts at a speed which is the difference between said two speeds and obtaining thus hat the dough is turned many times in a small space. In an embodiment in which it is worked with very hydrated dough said higher belt would be stopped. Using said double belt contribute very satisfactorily to provide that the total length of the machine is much shorter than that of the previously mentioned machines which used a single belt for same function.

For the embodiment shown in Figs. 3 and 4, said lower belt is moving at a constant speed in the sense of the dough exit and said higher belt is moving in the same sense as the dough exit with a given speed which is kept fixed for a given type of bread, but which is adjustable by means of a speed controller to adjust it to the obtention of other kinds of bread. Typical speed values of the higher belt are for example 15 m/min, 30 m/min. and 45 m/min. The advantage provided by the fact that the double conveyor belt 12 is moving in the same sense is that the loaf exits with its points backwards, an optimal shape for further dough treatment.

Following steps the dough will follow will consist in aligning the loaf, by means of an alignment device 13 which will suppress the possible unevenness of the dough, a cutting step with a cutter 14 cutting the loaf in several portions or rolls and a splitting and conveyance step for said portions, by means of a splitting-conveying module 15 (see Fig. 2) for said portions. Last, the loaves are placed on a baking tray (16 in Fig. 2) said tray after it is full being placed on other already placed, and also the opposite process will be carried out, that is to say loading the empty trays on said machine by means of an accumulating-loading device 17 arranged in the machine for that purpose.

For the embodiment shown in Figs. 3 and 4, the method proposed omits the above mentioned loaf aligning step and directly carries out said step of cutting the loaf in portions with said cutter 14, then a step is carried out for aligning the uneven fall of the loaf or of the recently formed portions thereof, by means of a fall stopping module 114 arranged in the machine proposed (see Fig. 4).

Later, said step of splitting and conveying said portions is carried out by means of said splitting-conveying module 15 (see Fig. 4), followed by a step of centring the loaf in the width of said baking tray by means of a centring module 115 included in the machine, and placing the loaves on a baking tray.

After said step of centring and placing the loaves, for the embodiment shown in Figs. 3 and 4, a step of automatically placing the baking trays and/or boards including said trays by means of an automatic placing device 116 arranged in the machine for that purpose, then a step of accumulating the baking trays after they are full and loading the empty trays on said machine by means of an accumulating-loading device 17 arranged in the machine for that purpose is carried out.

Last, same as in the preferred embodiment shown in Figs. 1 and 2, trays will be accumulated after they are full, one on the other, already previously placed, and the opposite process will be carried out, that is to say, to load the empty trays in said machine, by means of an accumulating-loading device 17 arranged in the machine for this purpose.

Another difference between the embodiment shown in Figs. 3 and 4 and that shown in Figs. 1 and 2 is that the mentioned loaf rest and conveyance step is carried out in an adjustable way by means of three conveyor belts 10 (see Fig. 4) arranged in said machine although the number of belts 10 could vary if it is thought convenient. By including said belts, total rest is adjustably increased up to approximately 3 minutes.

For the embodiment of Figs. 3 and 4, it is in addition foreseen, in the case of working with very hydrated dough or if it is sought to obtain a home-like-produced bread, after forming and stretching the loaf from the rolled flat cake and before said step of centring the loaf in the width of said baking tray, a step of dusting each loaf, one by one, is carried out with a related flour sprinkler 18 arranged in the machine.

The method proposed also contemplates the possibility that immediately after said step of dusting the loaf with flour and before said step of centring the loaf in the width of said baking tray, a step of conveying the loaf up to the mentioned centring module 115, which has to carry out said centring step (see Figs. 3 and 4), is carried out. Thus a home-like-produced bread can be obtained for which the loaf does not need to perform the whole forming circuit. Said conveying step is carried out by means of a top conveyor 19 included in the machine (see Fig. 4).

The rest of the steps which are not disclosed here for the embodiment shown in Figs. 3 and 4 are identical to those described above for the embodiment shown in Figs. 1 and 2, as it can be noted when comparing the figures which refer to both embodiments.

The doughs to be used with this method will have an approximate temperature of approximately 23° C, therefore the loaves obtained shall not be so thin as in the case of the fully automated machines mentioned in the background. If it is added to this matching the ball rest with the rough loaf forming and its striated-crushing, one will finally obtain a high quality bread with a significant crest, a very good toughness and elasticity ratio and a little damaged dough with a relatively little use of additives. To carry out the whole process only one operator will be required contrary to the traditional system, the machine occupying a not to broad space for a medium-sized production. The advantages associated to the fact that the machine is not too large-sized will be obviously also disclosed at economic level either referring to the initial investment as for the maintenance cost thereof.

A person skilled in the art could introduce changes and modifications in the above described embodiments without departing from the scope of this invention as defined in the claims appended.

## Claims

1. Method for forming and placing on trays dough of the kind which starting from a portion of uneven dough, through a series of intermediate steps a loaf of bread is obtained in a state prior to backing, being said steps as follows:
a) forming a dough with a spherical shape and a given weight;
b) forming a rough loaf having an adjustable length out of said spherical shaped dough;
c) adjustably rolling said rough loaf consisting in crushing it adopting an oval or circular shape like a flat cake;
d) rolling said flat cake;
e) forming and stretching said loaf from the rolled flat cake; and
f) placing the loaf on a baking tray;
**characterized in that**:
- after step a) and before step b) a ball rest step is carried out; and
- at step c) said rolling comprises a prior rolling consisting in a slight striated crushing then a further rolling.

2. Method according to claim 1, **characterized in that** said step a) is carried out by means of the two following steps:
a.1) splitting a dough to achieve a given weight;
a.2) kneading said dough to achieve a spherical shaped dough.

3. Method according to claim 1 or 2, **characterized in that** after the step d) and before the step e) a prior adjustable forming and stretching step is carried out for said loaf from the rolled flat cake as well as a loaf rest and conveyance step.

4. Method according to claim 3, **characterized in that** after said forming, stretching, resting and conveying steps a loaf centring step is carried out in the width of said machine.

5. Method, according to claim 1 or 2, **characterized in that** said ball rest is carried out in a bucket pouch during one to twelve minutes.

6. Method, according to claim 1 or 2, **characterized in that** the rough loaf formed at step b) is maximum approximately 200 mm long and for forming it at least a conical slide (5) is used.

7. Method, according to claim 1 or 2, **characterized in that** said crushing striating process is carried out by one or more rollers (6) arranged in said machine for said purpose, providing a better distribution of gases formed within the dough during the prior steps.

8. Method, according to claim 1 or 2, **characterized in that** said step e) is adjustably carried out by means of a double conveyor belt (12) arranged in said machine, formed by a lower belt and a higher belt.

9. Method, according to claim 8, **characterized in that** said lower belt is moving at a constant speed in the sense of the dough exit, and said higher belt is moving in the opposite sense to the dough exit with variable speed, said dough being moved between both belts at a speed which is the difference between said two speeds and obtaining thus that the dough is turned many times in a small space.

10. Method, according to claim 8, **characterized in that** said lower belt is moving at a constant speed in the sense of the dough exit and said higher belt is moving in the same sense as the dough exit with an adjustable speed to fit it to different kinds of bread, said adjustable speed being kept fixed while working with a given kind of bread.

11. Method, according to claim 1 or 2, **characterized in that** after the step e) a step of alignment of the loaf is carried out.

12. Method, according to claim 11, **characterized in that** after said alignment step, a step for cutting the loaf in portions is carried out.

13. Method, according to claim 1 or 2, **characterized in that** after step e) a step for cutting the loaf in portions is carried out.

14. Method, according to claim 12 or 13, **characterized in that** after said cutting step a step for aligning the uneven fall of the loaf or portions thereof is carried out.

15. Method according to claim 12 or 14 **characterized in that** after said cutting step or said step for aligning the uneven fall, a step for splitting and conveying said portions is carried out.

16. Method according to claim 1 or 2 **characterized in that** after step f) a step of accumulating said baking trays after they are full and loading the empty trays on said machine, by means of an accumulating-loading device (17) arranged in the machine for that purpose, is carried out.

17. Method according to claim 1 or 2 **characterized in that** immediately before step f), a step of centring the loaf in the width of said baking tray is carried out.

18. Method according to claim 17 **characterized in that** after step f) a step of automatically placing the baking trays and/or boards including said trays, by means of an automatic placing device (116) arranged in the machine for that purpose, is carried out.

19. Method according to claim 18 **characterized in that** after said automatically placing step a step of accumulating the baking trays after they are full and loading the empty trays on said machine, by means of an accumulating-loading device (17) arranged in the machine for that purpose, is carried out.

20. Method according to claim 1 **characterized in that** after said ball rest step and before said rough loaf forming, a step of dusting the dough with flour is carried out in the event it is worked with very hydrated dough.

21. Method, according to claim 17, **characterized in that** after said step e) and before the step of centring the loaves in the width of said baking tray, a step of dusting the dough with flour is carried out in the event it is worked with very hydrated dough or home-like-produced bread.

22. Method according to claim 21 **characterized in that** immediately after said step of dusting the loaf with flour and before said step of centring the loaf in the width of said baking tray, a step of conveying the loaf up to the mentioned centring module (115), which has to make said centring step, is carried out.

23. Method according to claim 7 **characterized in that** in the event of working with very hydrated doughs, said rollers (6) are made of a nonadherent material and operate jointly with an adhered dough scraping cleaning system.

24. Method according to claim 7 **characterized in that** in the event of working with very hydrated doughs, said rolling step d) is carried out by means of a metal curtain.

25. Method according to claim 3 **characterized in that** in the event of working with very hydrated doughs, said forming and stretching step includes a point forming step for said loaf by using a point forming system included in the machine.

26. Method according to claim 3 **characterized in that** said loaf obtained after said forming and stretching step is maximum 400 mm long and to achieve it, at least a conical slide (9) is used and said loaf rest and conveyance step lasts less than fifteen seconds.

27. Method according to claim 3 **characterized in that** said loaf rest and conveyance step is adjustably carried out by means of at least two conveyor belts (10) arranged in said machine.

28. Machine for forming and placing dough on trays of the kind which comprises means with which starting from an uneven portion of dough and through a series of intermediate steps, a loaf of bread is obtained in a state prior to baking, consisting one of said steps in adjustably rolling said dough, **characterized in that** it comprises one or more rollers (6) for striated crushing the dough in a step of prior rolling which is included in said rolling.

29. Machine, according to claim 28, **characterized in that** in the event of working with very hydrated dough said rollers (6) are made of nonadherent material and operate jointly with an adhered dough scraping cleaning system.
